# EUROPEAN PATENT SPECIFICATION

(11) **EP 2 878 572 B1**
(45) Date of publication and mention of the grant of the patent: **18.10.2017**
(21) Application number: 14194748.1
(22) Date of filing: 25.11.2014
(51) Int. Cl.: B66F 9/075

(54) **Electric forklift, steering control system used for the same and method for controlling electric forklift**
Elektrischer Gabelstapler, Lenkungskontrollsystem und Verfahren zur Steuerung elektrischer Gabelstapler
Chariot élévateur à fourche électrique, système de commande de direction utilisé pour celui-ci et procédé de commande de chariot élévateur à fourche électrique

(30) Priority: 29.11.2013 CN 201310629217
(43) Date of publication of application: 03.06.2015
(73) Proprietor: BYD Company Limited, Shenzhen, Guangdong 518118 (CN)
(72) Inventor: Guo, Qiang, 518118 Shenzhen (CN); Li, Wenlong, 518118 Shenzhen (CN)
(74) Representative: Steinbauer, Florian

(56) References cited:
- EP-A1- 2 447 104
- EP-A2- 1 972 482
- CN-A- 103 273 852
- CN-U- 202 297 042
- FR-A1- 2 864 721

## Description

### FIELD

Embodiments of the present disclosure generally relate to a vehicle technology field, and more particularly, to a steering control system used for an electric forklift, an electric forklift and a method for controlling an electric forklift.

### BACKGROUND

Currently, an electric power steering system of an electric forklift mainly adopts a brush DC motor, which dramatically increases a maintenance cost and results in a low efficiency.

In related art, a brushless DC motor also may be used in the electric forklift. However, it is generally required to perform an idle speed control if the electric power steering system adopts the brushless DC motor, and thus a real-time response cannot be implemented during a steering of the electric forklift and it is hard to satisfy a high power requirement of the electric forklift. Therefore, it is necessary to improve the electric power steering system of the electric forklift.

EP 2 447 104 A1 discloses a control system for monitoring a rotation speed control of an electric machine, which electric machine can be used for steering a mobile machine like a forklift.

EP 1 972 482 A1 discloses a steering control system for an industrial truck with a steering unit and a steering drive unit including an electric motor, in particular a brushless DC.

FR 2 864 721 A discloses a steering control device and a method of driving a brushless motor. The rotational speed of the brushless motor is controlled by a control circuit, which performs a control by means of a PWM method based on control parameters calculated on the basis of a difference between a target rotational speed and an actual rotational speed of the brushless motor.

### SUMMARY

Embodiments of the present disclosure seek to solve at least one of the problems existing in the related art to at least some extent.

Accordingly, an objective of the present disclosure is to provide a steering control system used for an electric forklift, which can make a real-time response to a steering request of the electric forklift, decrease power consumption of the electric forklift, improve a steering efficiency and save a maintenance cost.

Another objective of the present disclosure is to provide an electric forklift.

Yet another objective of the present disclosure is to provide a method for controlling an electric forklift.

According to a first aspect of the present disclosure, a steering control system used for an electric forklift is provided. The steering control system includes a brushless DC motor; a steering wheel encoder, configured to detect a rotating speed signal and a direction signal of a steering wheel of the electric forklift; a power driver, connected with the brushless DC motor and configured to drive the brushless DC motor; a sampler, connected with the brushless DC motor and configured to sample an operation of the brushless DC motor to generate a sampling signal; and a controller, connected with the steering wheel encoder, the power driver and the sampler respectively and configured to generate a PWM control signal according to the rotating speed signal and the direction signal of the steering wheel, the sampling signal and a predetermined control strategy, and to send the PWM control signal to the power driver to control the brushless DC motor via the power driver.

With the steering control system used for an electric forklift according to embodiments of the present disclosure, by detecting the rotating speed signal and the direction signal of the steering wheel of the electric forklift via the steering wheel encoder and sampling the operation of the brushless DC motor to generate the sampling signal via the sampler, the controller can generate the PWM control signal according to the rotating speed signal and the direction signal of the steering wheel, the sampling signal and the predetermined control strategy, and then send the PWM control signal to the power driver to control the brushless DC motor via the power driver, therefore, the real-time response to the steering request of the electric forklift can be made and a hand feeling of rotating the steering wheel can be ensured, moreover, the power consumption of the electric forklift can be decreased, the steering efficiency can be improved and the maintenance cost can be saved. The predetermined control strategy includes: controlling the brushless DC motor to start if the controller determines that the steering wheel is rotated, wherein the controller determines whether the steering wheel is rotated according to the rotating speed signal and the direction signal of the steering wheel and the sampling signal; controlling the brushless DC motor to operate at a first acceleration if a starting time of the brushless DC motor is less than a first predetermined threshold; controlling the brushless DC motor to operate at a second acceleration if the starting time of the brushless DC motor is larger than the first predetermined threshold and less than a second predetermined threshold, in which the second acceleration is less than the first acceleration; controlling the brushless DC motor to operate at a third acceleration if the controller determines that the steering wheel is still in operation and the starting time of the brushless DC motor is larger than the second predetermined threshold and less than a third predetermined threshold, in which the third acceleration is less than the first acceleration and larger than the second acceleration. Therefore, a hardware drive pressure is relieved by using a segmented speed rise strategy so as to implement a zero-speed start, and the threshold is of a millisecond level, thus ensuring the hand feeling of rotating the steering wheel.

In some embodiments, the steering control system further includes a CAN communication interface, configured to be used by the controller to communicate with a vehicle control unit of the electric forklift.

In some embodiments, the steering control system further includes a UART interface, configured to be used by the controller to communicate with an upper computer.

Therefore, a man-machine interaction can be achieved in the steering control system used for an electric forklift according to embodiments of the present disclosure.

In some embodiments, the steering control system further includes a memory module, configured to record an operation of the controller.

In some embodiments, the steering control system further includes a protection module, configured to perform an overvoltage and/or overcurrent protection on the steering control system.

In some embodiments, the power driver includes a first phase driving unit, a second phase driving unit and a third phase driving unit, each of the first to third phase driving units having N-level drivers, in which N is a positive integer. Therefore, the power driver can withstand a driving current instantly increased due to a real-time response mode adopted herein, and thus the corresponding real-time response can be made.

According to a second aspect of the present disclosure, an electric forklift is provided. The electric forklift includes a steering control system used for an electric forklift according to the first aspect of the present disclosure.

With the electric forklift according to embodiments of the present disclosure, a real-time response can be made to a steering request of the electric forklift and a hand feeling of rotating the steering wheel can be ensured; moreover, a power consumption of the electric forklift can be decreased, a steering efficiency can be improved and a maintenance cost can be saved.

According to a third aspect of the present disclosure, a method for controlling an electric forklift is provided, in which the electric forklift comprises a brushless DC motor and a steering wheel and the method includes steps of: detecting a rotating speed signal and a direction signal of the steering wheel; obtaining a sampling signal of an operation of the brushless DC motor; generating a PWM control signal according to the rotating speed signal and the direction signal of the steering wheel, the sampling signal and a predetermined control strategy; and controlling the brushless DC motor according to the PWM control signal to control the electric forklift.

With the method for controlling an electric forklift according to embodiments of the present disclosure, by detecting the rotating speed signal and the direction signal of the steering wheel and sampling the operation of the brushless DC motor to generate the sampling signal, and generating the PWM control signal according to the rotating speed signal and the direction signal of the steering wheel, the sampling signal and the predetermined control strategy to control the brushless DC motor, therefore, real-time response to the steering request of the electric forklift can be made and a hand feeling of rotating the steering wheel can be ensured, moreover, the power consumption of the electric forklift can be decreased, the steering efficiency can be improved and the maintenance cost can be saved. The predetermined control strategy includes: controlling the brushless DC motor to start if the steering wheel is rotated, wherein whether the steering wheel is rotated is determined according to the rotating speed signal and the direction signal of the steering wheel and the sampling signal; controlling the brushless DC motor to operate at a first acceleration if a starting time of the brushless DC motor is less than a first predetermined threshold; and controlling the brushless DC motor to operate at a second acceleration if the starting time of the brushless DC motor is larger than the first predetermined threshold and less than a second predetermined threshold, in which the second acceleration is less than the first acceleration.

In some embodiments, the predetermined control strategy further includes: controlling the brushless DC motor to operate at a third acceleration if the steering wheel is still in operation and the starting time of the brushless DC motor is larger than the second predetermined threshold and less than a third predetermined threshold, in which the third acceleration is less than the first acceleration and larger than the second acceleration.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a block diagram of a steering control system used for an electric forklift according to an embodiment of the present disclosure;
Fig. 2 is a schematic diagram showing an operation of a predetermined control strategy in a steering control system used for an electric forklift according to an embodiment of the present disclosure;
Fig. 3 is a schematic diagram of a steering control system used for an electric forklift according to another embodiment of the present disclosure;
Fig. 4 is a schematic circuit diagram of a first phase driving unit of a power driver in a steering control system used for an electric forklift according to an embodiment of the present disclosure;
Fig. 5 is a block diagram of an electric forklift according to an embodiment of the present disclosure; and
Fig. 6 is a flow chart of a method for controlling an electric forklift according to an embodiment of the present disclosure.

### DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure. Instead, the embodiments of the present disclosure include all the variants, modifications and their equivalents within the scope of the claims.

It is to be understood that, in the description of the present disclosure, terms of "first" and "second" are only used for description and cannot be seen as indicating or implying relative importance. Unless otherwise stipulated and restricted, it is to be explained that terms of "linkage" and "connection" shall be understood broadly, for example, it could be mechanical connection or electrical connection; it could be direct linkage, indirect linkage via intermediate medium. Those skilled in the art shall understand the concrete notations of the terms mentioned above according to specific circumstances. Furthermore, unless otherwise explained, it is to be understood that a term of "a plurality of" refers to two or more.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, which should be understood by those skilled in the art.

A steering control system used for an electric forklift, an electric forklift and a method for controlling an electric forklift will be described in the following with reference to drawings.

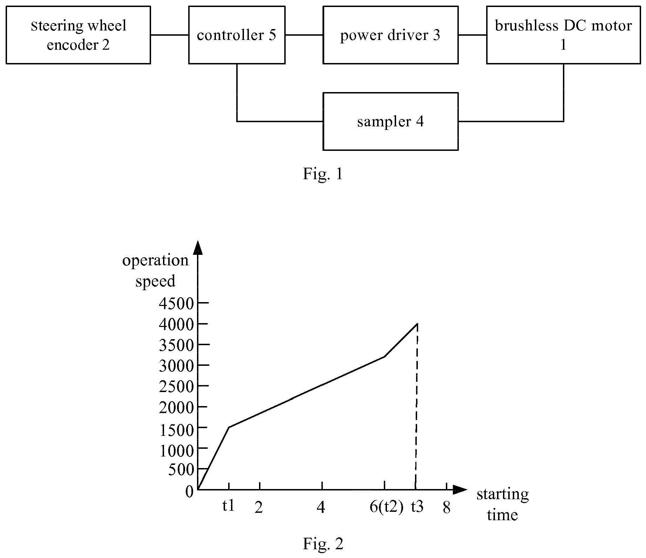

Fig. 1 is a block diagram of a steering control system used for an electric forklift according to an embodiment of the present disclosure.

As shown in Fig. 1, the steering control system used for an electric forklift includes a brushless DC motor 1, a steering wheel encoder 2, a power driver 3, a sampler 4 and a controller 5. The steering wheel encoder 2 is configured to detect a rotating speed signal and a direction signal of a steering wheel of the electric forklift. The power driver 3 is connected with the brushless DC motor 1 and is configured to drive the brushless DC motor 1. The sampler 4 is connected with the brushless DC motor 1 and is configured to sample an operation of the brushless DC motor 1 to generate a sampling signal.

As shown in Fig. 1, the controller 5 is connected with the steering wheel encoder 2, the power driver 3 and the sampler 4 respectively and is configured to generate a PWM (pulse width modulation) control signal according to the rotating speed signal and the direction signal of the steering wheel, the sampling signal and a predetermined control strategy, and to send the PWM control signal to the power driver 3 to control the brushless DC motor 1 via the power driver 3.

Specifically, the steering wheel encoder 2 sends the detected rotating speed signal and the detected direction signal of the steering wheel of the electric forklift to the controller 5 such as a MCU (Micro Control Unit) to be processed. The MCU controls the brushless DC motor 1 to start according the signal from the steering wheel encoder 2 and generates the PWM control signal to drive the brushless DC motor 1 to operate via the power driver 3. In addition, the sampler 4 feeds the sampling signal back to the MCU, and the MCU generates the corresponding PWM control signal according to the predetermined control strategy so as to adjust a rising speed of the brushless DC motor 1.

Fig. 2 is a schematic diagram showing an operation of a predetermined control strategy in a steering control system used for an electric forklift according to an embodiment of the present disclosure.

As shown in Fig. 2, the predetermined control strategy includes: controlling the brushless DC motor 1 to start if the controller 5 determines that the steering wheel is rotated, in which the controller 5 determines whether the steering wheel is rotated according to the rotating speed signal and the direction signal of the steering wheel and the sampling signal, then if a starting time of the brushless DC motor 1 is less than a first predetermined threshold t₁ (such as 1), controlling the brushless DC motor 1 to operate at a first acceleration a₁; if the starting time of the brushless DC motor 1 is larger the first predetermined threshold t₁ (such as 1) and less than a second predetermined threshold t₂ (such as 6), controlling the brushless DC motor 1 to operate at a second acceleration a₂, in which the second acceleration a₂ is less than the first acceleration a₁; if the controller 5 determines that the steering wheel is still in operation and the starting time of the brushless DC motor 1 is larger than the second predetermined threshold a₂ (such as 6) and less than a third predetermined threshold a₃ (such as 7), controlling the brushless DC motor 1 to operate at a third acceleration a₃, in which the third acceleration a₃ is less than the first acceleration a₁ and larger than the second acceleration a₂.

Certainly, there may be more than three preset speed levels, and not limited to three.

Accordingly, the predetermined control strategy according to embodiments of the present disclosure has various adaptations.

Therefore, a hardware drive pressure is relieved by using a segmented speed rise strategy, i.e., presetting a plurality of speed levels, and the controller 5 controls a rise of a speed of the brushless DC motor 1 according to the feedback speed of the brushless DC motor 1 from the sampler 4 so as to implement a zero-speed start and ensure the hand feeling of rotating the steering wheel.

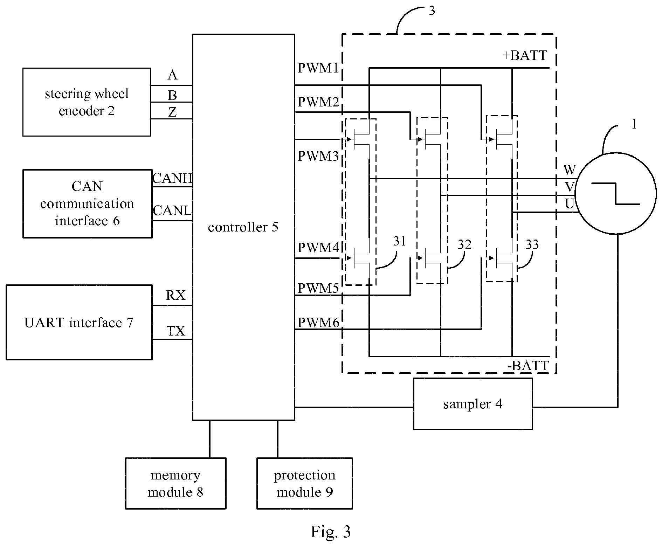

Fig. 3 is a schematic diagram of a steering control system used for an electric forklift according to another embodiment of the present disclosure.

In another embodiment of the present disclosure as shown in Fig. 3, the steering control system used for an electric forklift further includes a CAN (Controller Area Network) communication interface 6. The controller 5 communicates with a vehicle control unit of the electric forklift via the CAN communication interface 6. Preferably, the CAN communication interface 6 is connected with a CANH terminal and a CANL terminal of the controller 5.

In one embodiment, as shown in Fig. 3, the steering control system used for an electric forklift further includes a UART (universal asynchronous receiver/transmitter) interface 7. The controller 5 communicates with an upper computer via the UART interface 7. Preferably, the UART interface 5 is connected with a RX terminal and a TX terminal of the controller 5.

Therefore, a man-machine interaction can be achieved in the steering control system used for an electric forklift according to embodiments of the present disclosure.

In one embodiment, as shown in Fig. 3, the steering control system used for an electric forklift further includes a memory module 8. The memory module 8 is configured to record an operation of the controller 5.

In one embodiment, as shown in Fig. 3 the steering control system used for an electric forklift further includes a protection module 9. The protection module 9 is configured to perform an overvoltage and/or overcurrent protection on the steering control system.

Additionally, the steering control system used for an electric forklift further includes a power source module (not shown in Fig. X). The power source module is configured to perform a voltage reduction process so as to supply power to the controller 5.

Specifically, as shown in Fig. 3, the power driver 3 includes a first phase driving unit 31, a second phase driving unit 32 and a third phase driving unit 33. Each of the first phase driving unit 31, the second driving unit 32 and the third phase driving unit 33 may include N-level drivers, in which N is a positive integer. Preferably, an input terminal of the first phase driving unit 31 is connected with a PWM3 terminal and a PWM4 terminal of the controller 5, and an output terminal of the first phase driving unit 31 is connected with a W phase of the brushless DC motor 1; an input terminal of the second phase driving unit 32 is connected with a PWM2 terminal and a PWM5 terminal of the controller 5, and an output terminal of the second phase driving unit 32 is connected with a V phase of the brushless DC motor 1; an input terminal of the third phase driving unit 33 is connected with a PWM1 terminal and a PWM6 terminal of the controller 5, and an output terminal of the third phase driving unit 33 is connected with a U phase of the brushless DC motor 1.

A circuit theory of the first phase driving unit 31 in the power driver 3 will be described in the following taking an example of N=6.

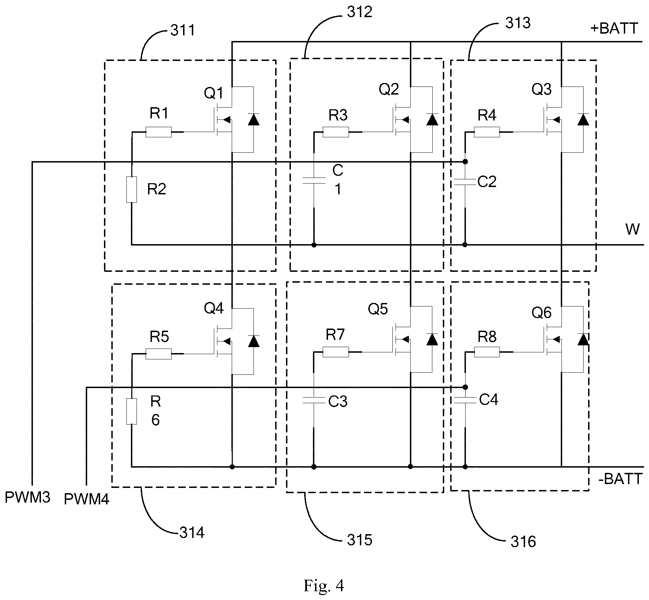

Fig. 4 is a schematic circuit diagram of a first phase driving unit of a power driver in a steering control system used for an electric forklift according to an embodiment of the present disclosure.

As shown in Fig. 4, the first phase driving unit 31 includes a first level driver 311, a second level driver 312, a third level driver 313, a fourth level driver 314, a fifth level driver 315 and a sixth level driver 316. The first level driver 311, the second level driver 312 and the third level driver 313 are connected with each other in parallel and are connected between a first predetermined voltage +BATT and the W phase of the brushless DC motor 1; the fourth level driver 314, the fifth level driver 315 and the sixth level driver 316 are connected with each other in parallel and are connected between a second predetermined voltage -BATT and the W phase of the brushless DC motor 1.

In this way, three MOS (Metal Oxide Semiconductor) transistors connected with each other in parallel are adopted in the hardware, and supposing that an I_{ds} of each MOS transistor is 100A, a maximum current withstood by the power driver 3 can reach 300A, such that the power driver 3 can withstand a driving current instantly increased due to a real-time response manner adopted herein, and thus the real-time response can be made.

Specifically, as shown in Fig. 4, the first level driver 311 includes a first MOS transistor Q1, a first resistor R1 and a second resistor R2. A drain of the first MOS transistor Q1 is connected with the first predetermined voltage +BATT, and a source of the first MOS transistor Q1 is connected with the fourth level driver 314, and a gate of the first MOS transistor Q1 is connected with a first terminal of the first resistor R1, and a second terminal of the first resistor R1 is connected with a first terminal of the second resistor R2, and a second terminal of the second resistor R2 is connected with the W phase of the brushless DC motor 1.

As shown in Fig. 4, the second level driver 312 includes a second MOS transistor Q2, a third resistor R3 and a first capacitor C1. A drain of the second MOS transistor Q2 is connected with the first predetermined voltage +BATT, and a source of the second MOS transistor Q2 is connected with the fifth level driver 315, and a gate of the second transistor Q2 is connected with a first terminal of the third resistor R3, and a second terminal of the third resistor R3 is connected with a first terminal of the first capacitor C1 and a second terminal of the first capacitor C1 is connected with the W phase of the brushless DC motor 1.

As shown in Fig. 4, the third level driver 313 includes a third transistor Q3, a fourth resistor R4 and a second capacitor C2. A drain of the third transistor Q3 is connected with the first predetermined voltage +BATT, and a source of the third transistor Q3 is connected with the sixth level driver 316, and a gate of the third transistor Q3 is connected with a first terminal of the fourth resistor R4, and a second terminal of the fourth resistor R4 is connected with the PWM3 terminal of the controller 5, a first terminal of the second capacitor C2 is connected with the second terminal of the fourth resistor R4 and a second terminal of the second capacitor C2 is connected with the W phase of the brushless DC motor 1.

As shown in Fig. 4, the fourth level driver 314 includes a fourth transistor Q4, a fifth resistor R5 and a sixth resistor R6. A drain of the fourth transistor Q4 is connected with the source of the first transistor Q1, and a source of the fourth transistor Q4 is connected with the second predetermined voltage -BATT, and a gate of the fourth transistor Q4 is connected with a first terminal of the fifth resistor R5, and a second terminal of the fifth resistor R5 is connected with a first terminal of the sixth resistor R6 and a second terminal of the sixth resistor R6 is connected with the second predetermined voltage -BATT.

As shown in Fig. 4, the fifth level driver 315 includes a fifth transistor Q5, a seventh resistor R7 and a third capacitor C3. A drain of the fifth transistor Q5 is connected with the source of the second transistor Q2, and a source of the fifth transistor Q5 is connected with the second predetermined voltage -BATT, and a gate of the fifth transistor Q5 is connected with a first terminal of the seventh resistor R7, and a second terminal of the seventh resistor R7 is connected with a first terminal of the third capacitor C3 and a second terminal of the third capacitor C3 is connected with the second predetermined voltage -BATT.

As shown in Fig. 4, the sixth level driver 316 includes a sixth transistor Q6, an eighth resistor R8 and a fourth capacitor C4. A drain of the sixth transistor Q6 is connected with the source of the third transistor Q3, and a source of the sixth transistor Q6 is connected with the second predetermined voltage -BATT, and a gate of the sixth transistor Q6 is connected with a first terminal of the eighth resistor R8, and a second terminal of the eighth resistor R8 is connected with the PWM4 terminal of the controller 5, and a first terminal of the fourth capacitor C4 is connected with the second terminal of the eighth resistor R8 and a second terminal of the fourth capacitor C4 is connected with the second predetermined voltage -BATT.

It should be understood that the second phase driving unit 32 and the third phase driving unit 33 can be implemented referring to the first phase driving unit 31. In this case, it is not described herein.

It should be noted that, the above embodiment is just a preferable example of the present disclosure and shall not be used to limit the present disclosure. For example, both a selection of the number of the MOS transistors and a modification of a connection mode of the MOS transistors shall be fallen into the protection scope of the present disclosure.

With the steering control system used for an electric forklift according to embodiments of the present disclosure, by detecting the rotating speed signal and the direction signal of the steering wheel of the electric forklift via the steering wheel encoder and sampling the operation of the brushless DC motor to generate the sampling signal via the sampler, the controller can generate the PWM control signal according to the rotating speed signal and the direction signal of the steering wheel, the sampling signal and the predetermined control strategy, and then send the PWM control signal to the power driver to control the brushless DC motor via the power driver, therefore, the real-time response to a steering request of the electric forklift can be made and a hand feeling of rotating the steering wheel can be ensured, moreover, a power consumption of the electric forklift can be decreased, a steering efficiency can be improved and a maintenance cost can be saved.

In the following, an electric forklift according to embodiments of the present disclosure will be described in detail with reference to drawings.

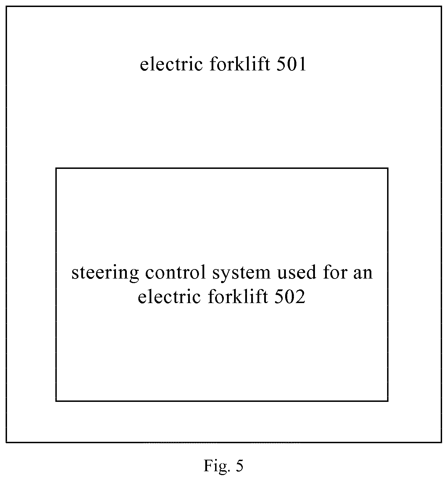

Fig. 5 is block diagram of an electric forklift according to an embodiment of the present disclosure.

As shown in Fig. 5, the electric forklift 501 includes a steering control system 502 used for an electric forklift described in above embodiments of the present disclosure.

With the electric forklift according to embodiments of the present disclosure, a real-time response can be made to a steering request of the electric forklift and a hand feeling of rotating the steering wheel can be ensured; moreover, a power consumption of the electric forklift can be decreased, a steering efficiency can be improved and a maintenance cost can be saved.

In the following, a method for controlling an electric forklift according to embodiments of the present disclosure will be described in detail with reference to drawings.

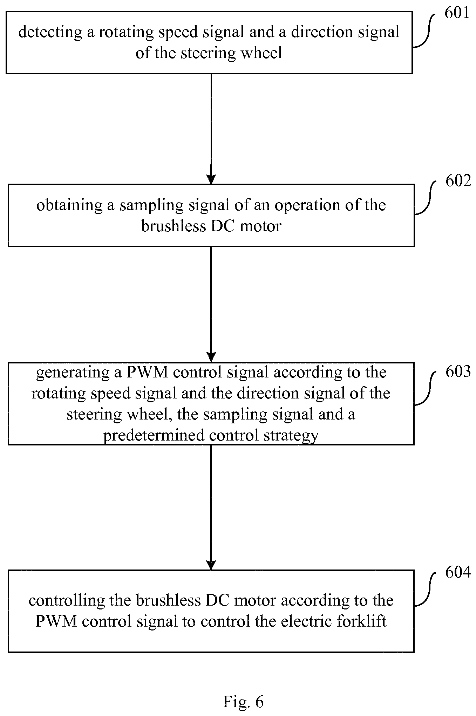

Fig. 6 is a flow chart of a method for controlling an electric forklift according to an embodiment of the present disclosure.

As shown in Fig. 6, the method for controlling an electric forklift includes the following steps, in which the electric forklift includes a brushless DC motor and a steering wheel.

At step 601, a rotating speed signal and a direction signal of the steering wheel are detected.

Specifically, the rotating speed signal and the direction signal of a steering wheel can be detected by a steering wheel encoder, for example, the steering wheel encoder 2 shown in Fig. 1.

At step 602, a sampling signal of an operation of the brushless DC motor is obtained.

Specifically, the sampling signal of an operation of the brushless DC motor is obtained by a sampler, for example, the sampler 4 shown in Fig. 1.

At step 603, a PWM control signal according to the rotating speed signal and the direction signal of the steering wheel, the sampling signal and a predetermined control strategy is generated.

Specifically, the PWM control signal is generated by a controller, for example, the controller 5 shown in Fig. 1. The predetermined control strategy includes: controlling the brushless DC motor to start if the steering wheel is rotated, wherein whether the steering wheel is rotated is determined according to the rotating speed signal and the direction signal of the steering wheel and the sampling signal; controlling the brushless DC motor to operate at a first acceleration if a starting time of the brushless DC motor is less than a first predetermined threshold; and controlling the brushless DC motor to operate at a second acceleration if the starting time of the brushless DC motor is larger than the first predetermined threshold and less than a second predetermined threshold, in which the second acceleration is less than the first acceleration.

In some embodiments, the predetermined control strategy further includes: controlling the brushless DC motor to operate at a third acceleration if the steering wheel is still in operation and the starting time of the brushless DC motor is larger than the second predetermined threshold and less than a third predetermined threshold, in which the third acceleration is less than the first acceleration and larger than the second acceleration.

Certainly, there may be more than three preset speed levels, and not limited to three.

Accordingly, the predetermined control strategy according to embodiments of the present disclosure has various adaptations.

Therefore, a hardware drive pressure is relieved by using a segmented speed rise strategy, i.e., presetting a plurality of speed levels, and a rise of a speed of the brushless DC motor according to the feedback speed of the brushless DC motor so as to implement a zero-speed start and ensure the hand feeling of rotating the steering wheel.

At step 604, the brushless DC motor is controlled according to the PWM control signal to control the electric forklift.

Specifically, firstly, the PWM control signal can be generated by the controller, and then the PWM control signal can be send to a power driver, for example, the power driver 3 shown in Fig. 1, and then the power driver can drive the brushless DC motor according to the PWM control signal.

In some embodiments, the method for controlling an electric forklift further including: recording an operation state of the controller.

With the method for controlling an electric forklift according to embodiments of the present disclosure, by detecting the rotating speed signal and the direction signal of the steering wheel and sampling the operation of the brushless DC motor to generate the sampling signal, and generating the PWM control signal according to the rotating speed signal and the direction signal of the steering wheel, the sampling signal and the predetermined control strategy to control the brushless DC motor, therefore, real-time response to the steering request of the electric forklift can be made and a hand feeling of rotating the steering wheel can be ensured, moreover, the power consumption of the electric forklift can be decreased, the steering efficiency can be improved and the maintenance cost can be saved.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure.

Although explanatory embodiments have been shown and described, it would be appreciated by those skilled in the art that the above embodiments cannot be construed to limit the present disclosure, and changes, alternatives, and modifications can be made in the embodiments without departing from the scope of the claims.

## Claims

1. A steering control system used for an electric forklift, comprising:
a brushless DC motor (1);
a steering wheel encoder (2), configured to detect a rotating speed signal and a direction signal of a steering wheel of the electric forklift;
a power driver (3), connected with the brushless DC motor (1) and configured to drive the brushless DC motor (1);
a sampler (4), connected with the brushless DC motor (1) and configured to sample an operation of the brushless DC motor (1) to generate a sampling signal; and
a controller (5), connected with the steering wheel encoder (2), the power driver (3) and the sampler (4) respectively and configured to generate a PWM control signal according to the rotating speed signal and the direction signal of the steering wheel, the sampling signal and a predetermined control strategy, and to send the PWM control signal to the power driver (3) to control the brushless DC motor (1) via the power driver (3),
**characterised in that** the predetermined control strategy comprises:
controlling the brushless DC motor (1) to start if the controller (5) determines that the steering wheel is rotated, wherein the controller (5) determines whether the steering wheel is rotated according to the rotating speed signal and the direction signal of the steering wheel and the sampling signal;
controlling the brushless DC motor (1) to operate at a first acceleration if a starting time of the brushless DC motor (1) is less than a first predetermined threshold; and
controlling the brushless DC motor (1) to operate at a second acceleration if the starting time of the brushless DC motor (1) is larger than the first predetermined threshold and less than a second predetermined threshold, in which the second acceleration is less than the first acceleration.

2. The steering control system according to claim 1, wherein the predetermined control strategy further comprises:
controlling the brushless DC motor (1) to operate at a third acceleration if the controller (5) determines that the steering wheel is still in operation and the starting time of the brushless DC motor (1) is larger than the second predetermined threshold and less than a third predetermined threshold, in which the third acceleration is less than the first acceleration and larger than the second acceleration.

3. The steering control system according to claim 1 or 2, further comprising:
a CAN communication interface (6), configured to be used by the controller (5) to communicate with a vehicle control unit of the electric forklift.

4. The steering control system according to any one of claims 1-3, further comprising:
a UART interface (7), configured to be used by the controller (5) to communicate with an upper computer.

5. The steering control system according to any one of claims 1-4, further comprising:
a memory module (8), configured to record an operation of the controller (5).

6. The steering control system according to any one of claims 1-5, further comprising:
a protection module (9), configured to perform an overvoltage and/or overcurrent protection on the steering control system.

7. The steering control system according to any one of claims 1-6, wherein the power driver (3) comprises a first phase driving unit (31), a second phase driving unit (32) and a third phase driving unit (33), each of the first to third phase driving units (31, 32 and 33) having N-level drivers, in which N is a positive integer.

8. An electric forklift, comprising a steering control system used for an electric forklift according to any one of claims 1-7.

9. A method for controlling an electric forklift, wherein the electric forklift comprises a brushless DC motor and a steering wheel and the method comprises:
detecting a rotating speed signal and a direction signal of the steering wheel;
obtaining a sampling signal of an operation of the brushless DC motor;
generating a PWM control signal according to the rotating speed signal and the direction signal of the steering wheel, the sampling signal and a predetermined control strategy; and
controlling the brushless DC motor according to the PWM control signal to control the electric forklift,
**characterised in that** the predetermined control strategy comprises:
controlling the brushless DC motor to start if the steering wheel is rotated, wherein whether the steering wheel is rotated is determined according to the rotating speed signal and the direction signal of the steering wheel and the sampling signal;
controlling the brushless DC motor to operate at a first acceleration if a starting time of the brushless DC motor is less than a first predetermined threshold; and
controlling the brushless DC motor to operate at a second acceleration if the starting time of the brushless DC motor is larger than the first predetermined threshold and less than a second predetermined threshold, in which the second acceleration is less than the first acceleration.

10. The method according to claim 9, wherein the predetermined control strategy further comprises:
controlling the brushless DC motor to operate at a third acceleration if the steering wheel is still in operation and the starting time of the brushless DC motor is larger than the second predetermined threshold and less than a third predetermined threshold, in which the third acceleration is less than the first acceleration and larger than the second acceleration.

## Patentansprüche

1. Lenksteuersystem, das für einen elektrischen Stapler verwendet wird, umfassend:
einen bürstenlosen DC-Motor (1);
einen Lenkradimpulsgeber (2), der konfiguriert ist, um ein Drehgeschwindigkseitssignal und ein Richtungssignal eines Lenkrads des elektrischen Staplers zu erfassen;
einen Energietreiber (3), der mit dem bürstenlosen DC-Motor (1) verbunden ist und konfiguriert ist, um den bürstenlosen DC-Motor anzutreiben;
einen Abtaster (4), der mit dem bürstenlosen DC-Motor (1) verbunden und konfiguriert ist, um einen Betrieb des bürstenlosen DC-Motors (1) abzutasten, um ein Abtastsignal zu erzeugen; und
eine Steuereinheit (5), die jeweils mit dem Lenkradimpulsgeber (2), dem Energietreiber (3) und dem Abtaster (4) verbunden ist und konfiguriert ist, um ein PWM-Steuersignal gemäß dem Drehgeschwindigkeitssignal und dem Richtungssignal des Lenkrades, dem Abtastsignal und einer vorbestimmten Steuerstrategie zu erzeugen und das PWM-Signal an den Energietreiber (3) zu senden, um den bürstenlosen DC-Motor (1) über den Energietreiber (3) zu steuern,
**dadurch gekennzeichnet, dass** die vorbestimmte Steuerstrategie umfasst:
Steuern des bürstenlosen DC-Motors (1), um zu starten, wenn die Steuereinheit (5) bestimmt, dass das Lenkrad gedreht wird, wobei die Steuereinheit (5) bestimmt, ob das Lenkrad gemäß dem Drehgeschwindigkeitssignal und dem Richtungssignal des Lenkrades und dem Abtastsignal gedreht wird;
Steuern des bürstenlosen DC-Motors (1), um bei einer ersten Beschleunigung zu arbeiten, wenn eine Startzeit des bürstenlosen DC-Motors (1) weniger als ein erster vorbestimmter Schwellwert ist; und
Steuern des bürstenlosen DC-Motors (1), um bei einer zweiten Beschleunigung zu arbeiten, wenn die Startzeit des bürstenlosen DC-Motors (1) größer als der erste vorbestimmte Schwellwert und weniger als ein zweiter vorbestimmter Schwellwert ist, wobei die zweite Beschleunigung kleiner als die erste Beschleunigung ist.

2. Lenksteuersystem nach Anspruch 1, wobei die vorbestimmte Steuerstrategie ferner umfasst:
Steuern des bürstenlosen DC-Motors (1), um bei einer dritten Beschleunigung zu arbeiten, wenn die Steuereinheit (5) bestimmt, dass das Lenkrad immer noch im Betrieb ist und die Startzeit des bürstenlosen DC-Motors (1) größer als der zweite vorbestimmte Schwellwert und kleiner als ein dritter vorbestimmter Schwellwert ist, wobei die dritte Beschleunigung kleiner als die erste Beschleunigung und größer als die zweite Beschleunigung ist.

3. Lenksteuersystem nach Anspruch 1 oder 2, ferner umfassend:
eine CAN-Kommunikationsschnittstelle (6), die konfiguriert ist, um von der Steuereinheit (5) verwendet zu werden, um mit einer Fahrzeugsteuereinheit des elektrischen Staplers zu kommunizieren.

4. Lenksteuersystem nach einem der Ansprüche 1-3, ferner umfassend:
eine UART-Schnittstelle (7), die konfiguriert ist, um von der Steuereinheit (5) verwendet zu werden, um mit einem oberen Computer zu kommunizieren.

5. Lenksteuersystem nach einem der Ansprüche 1-4, ferner umfassend: ein Speichermodul (8), das konfiguriert ist, um einen Betrieb der Steuereinheit (5) aufzunehmen.

6. Lenksteuersystem nach einem der Ansprüche 1-5, ferner umfassend:
ein Schutzmodul (9), das konfiguriert ist, um einen Überspannungs- und/oder Überstromschutz auf dem Lenksteuersystem durchzuführen.

7. Lenksteuersystem nach einem der Ansprüche 1-6, wobei der Energietreiber (3) eine erste Phasenantriebseinheit (31), eine zweite Phasendantriebseinheit (32) und eine dritte Phasenantriebseinheit (33) umfasst, wobei jede der ersten bis dritten Phasenantriebseinheit (31, 32 und 33) N-Niveau Treiber aufweist, wobei N eine positive ganze Zahl ist.

8. Elektrischer Stapler, der ein Lenksteuersystem, das für einen elektrischen Stapler verwendet wird, nach einem der Ansprüche 1-7 umfasst.

9. Verfahren zum Steuern eines elektrischen Staplers, wobei der elektrische Stapler einen bürstenlosen DC-Motor und ein Lenkrad umfasst und das Verfahren umfasst:
Erfassen eine Drehgeschwindigkeitssignals und eines Richtungssignals des Lenkrads;
Erhalten eines Abtastsignals eines Betriebs des bürstenlosen DC-Motors;
Erzeugen eines PWM-Steuersignals gemäß dem Drehgeschwindigkeitssignal und dem Richtungssignal des Lenkrads, dem Abtastsignals und einer vorbestimmten Steuerstrategie; und
Steuern des bürstenlosen DC-Motors gemäß dem PWM-Steuersignal, um den elektrischen Stapler zu steuern,
**dadurch gekennzeichnet dass** die vorbestimmte Steuerstrategie umfasst:
Steuern des bürstenlosen DC-Motors, um zu starten, wenn das Lenkrad gedreht wird, wobei bestimmt wird, ob das Lenkrad gedreht wird, gemäß dem Drehgeschwindigkeitssignal und dem Richtungssignal des Lenkrads und dem Abtastsignal;
Steuern des bürstenlosen DC-Motors, um bei einer ersten Beschleunigung zu arbeiten, wenn eine Startzeit des bürstenlosen DC-Motors kleiner als ein erster vorbestimmter Schwellwert ist; und
Steuern des bürstenlosen DC-Motors, um bei einer zweiten Beschleunigung zu arbeiten, wenn die Startzeit des bürstenlosen DC-Motors größer als der erste vorbestimmte Schwellwert und kleiner als ein zweiter vorbestimmter Schwellwert ist, wobei die zweite Beschleunigung kleiner als die erste Beschleunigung ist.

10. Verfahren nach Anspruch 9, wobei die vorbestimmte Steuerstrategie ferner umfasst:
Steuern des bürstenlosen DC-Motors, um bei einer dritten Beschleunigung zu arbeiten, wenn das Lenkrad immer noch in Betrieb ist und die Startzeit des bürstenlosen DC-Motors größer als der zweite vorbestimmte Schwellwert und kleiner als ein dritter vorbestimmter Schwellwert ist, wobei die dritte Beschleunigung kleiner als die erste Beschleunigung und größer als die zweite Beschleunigung ist.

## Revendications

1. Système de commande de direction utilisé pour un chariot à fourche électrique, comportant :
un moteur à courant continu (DC) sans balai (1) ;
un codeur de volant de direction (2), configuré pour détecter un signal de vitesse de rotation et un signal de direction d'un volant de direction du chariot à fourche électrique ;
un dispositif de commande d'alimentation (3), relié au moteur DC sans balai (1) et configuré pour piloter le moteur DC sans balai (1) ; ;
un échantillonneur (4), relié au moteur DC sans balai (1) et configuré pour échantillonner un fonctionnement du moteur DC sans balai (1) pour générer un signal d'échantillonnage ; et
un contrôleur (5), relié au codeur de volant de direction (2), au dispositif de commande d'alimentation (3) et à l'échantillonneur (4) respectivement et configuré pour générer un signal de commande PWM en fonction du signal de vitesse de rotation et du signal de direction du volant de direction, du signal d'échantillonnage et d'une stratégie de commande prédéterminée, et pour envoyer le signal de commande PWM au dispositif de commande d'alimentation (3) pour commander le moteur DC sans balai (1) via le dispositif de commande d'alimentation (3),
**caractérisé en ce que** la stratégie de commande prédéterminée comporte les étapes consistant à :
commander le démarrage du moteur DC sans balai (1) si le contrôleur (5) détermine que le volant de direction tourne, dans lequel le contrôleur (5) détermine si le volant de direction tourne en fonction du signal de vitesse de rotation et du signal de direction du volant de direction et du signal d'échantillonnage ;
commander le fonctionnement du moteur DC sans balai (1) à une première accélération si un temps de démarrage du moteur DC sans balai (1) est inférieur à un premier seuil prédéterminé ; et
commander le fonctionnement du moteur DC sans balai (1) à une deuxième accélération si le temps de démarrage du moteur DC sans balai (1) est supérieur au premier seuil prédéterminé et inférieur à un deuxième seuil prédéterminé, dans lequel la deuxième accélération est inférieure à la première accélération.

2. Système de commande de direction selon la revendication 1, dans lequel la stratégie de commande prédéterminée comporte en outre les étapes consistant à :
commander le fonctionnement du moteur DC sans balai (1) à une troisième accélération si le contrôleur (5) détermine que le volant de direction est toujours en fonctionnement et que le temps de démarrage du moteur DC sans balai (1) est supérieur au deuxième seuil prédéterminé et inférieur à un troisième seuil prédéterminé, dans lequel la troisième accélération est inférieure à la première accélération et supérieure à la deuxième accélération.

3. Système de commande de direction selon la revendication 1 ou 2, comportant en outre :
une interface de communication CAN (6), configurée pour être utilisée par le contrôleur (5) pour communiquer avec une unité de commande de véhicule du chariot à fourche électrique.

4. Système de commande de direction selon l'une quelconque des revendications 1 à 3, comportant en outre :
une interface UART (7), configurée pour être utilisée par le contrôleur (5) pour communiquer avec un calculateur de niveau supérieur.

5. Système de commande de direction selon l'une quelconque des revendications 1 à 4, comportant en outre :
un module de mémoire (8), configuré pour enregistrer un fonctionnement du contrôleur (5).

6. Système de commande de direction selon l'une quelconque des revendications 1 à 5, comportant en outre :
un module de protection (9), configuré pour réaliser une protection contre les surtensions et/ou les surintensités sur le système de commande de direction.

7. Système de commande de direction selon l'une quelconque des revendications 1 à 6, dans lequel le dispositif de commande d'alimentation (3) comporte une première unité de commande de phase (31), une deuxième unité de commande de phase (32) et une troisième unité de commande de phase (33), chacune des première à troisième unités de commande de phase (31, 32 et 33) ayant des dispositifs de commande de niveau N, N étant un entier positif.

8. Chariot à fourche électrique, comportant un système de commande de direction utilisé pour un chariot à fourche électrique selon l'une quelconque des revendications 1 à 7.

9. Procédé pour commander un chariot à fourche électrique, dans lequel le chariot à fourche électrique comporte un moteur DC sans balai et un volant de direction et le procédé comporte les étapes consistant à :
détecter un signal de vitesse de rotation et un signal de direction du volant de direction ;
obtenir un signal d'échantillonnage d'un fonctionnement du moteur DC sans fil ;
générer un signal de commande PWM en fonction du signal de vitesse de rotation et du signal de direction du volant de direction, du signal d'échantillonnage et d'une stratégie de commande prédéterminée ; et
commander le moteur DC sans balai en fonction du signal de commande PWM pour commander le chariot à fourche électrique,
**caractérisé en ce que** la stratégie de commande prédéterminée comporte les étapes consistant à :
commander le démarrage du moteur DC sans balai si le volant de direction tourne, dans lequel il est déterminé si le volant de direction tourne d'après le signal de vitesse de rotation, le signal de direction du volant de direction et le signal d'échantillonnage ;
commander le fonctionnement du moteur DC sans balai à une première accélération si un temps de démarrage du moteur DC sans balai est inférieur à un premier seuil prédéterminé ; et
commander le fonctionnement du moteur DC sans balai à une deuxième accélération si le temps de démarrage du moteur DC sans balai est supérieur au premier seuil prédéterminé et inférieur à un deuxième seuil prédéterminé, dans lequel la deuxième accélération est inférieure à la première accélération.

10. Procédé selon la revendication 9, dans lequel la stratégie de commande prédéterminée comporte en outre l'étape consistant à :
commander le fonctionnement du moteur DC sans balai à une troisième accélération si le volant de direction est toujours en fonctionnement et le temps de démarrage du moteur DC sans balai est supérieur au deuxième seuil prédéterminé et inférieur à un troisième seuil prédéterminé, dans lequel la troisième accélération est inférieure à la première accélération et supérieure à la deuxième accélération.
